# FASCICULE DE BREVET EUROPEEN

(11) **EP 2 354 622 B1**
(45) Date de publication et mention de la délivrance du brevet: **07.11.2012**
(21) Numéro de dépôt: 10305104.1
(22) Date de dépôt: 01.02.2010
(51) Int. Cl.: F16L 59/075, F16L 59/14, B64G 1/40, B64G 1/58, F17C 3/00

(54) **Article d'isolation cryogénique à capotage notamment destiné à protéger des réservoirs cryotechniques**
Kryogener Isolationsartikel mit Verkleidung, insbesondere für den Schutz von kryotechnischen Behältern
Cryogenic insulation item with cover, in particular intended for protecting cryotechnical tanks

(43) Date de publication de la demande: 10.08.2011
(73) Titulaire: Cryospace l'air liquide aerospatiale, 78130 Les Mureaux (FR)
(72) Inventeur: Ruhlmann, Pascal, 75008 Paris (FR); Peyraud, François, 78440 Gargenville (FR)
(74) Mandataire: Ilgart, Jean-Christophe

(56) Documents cités:
- EP-A1- 1 878 663
- FR-A5- 2 055 577
- US-A- 4 036 617

## Description

### DOMAINE TECHNIQUE

L'invention concerne en premier lieu un article d'isolation cryogénique destiné à protéger notamment des réservoirs soumis à des températures cryogéniques, contenant des ergols qui doivent être maintenus en phase liquide en minimisant les pertes thermiques. Elle s'étend aux réservoirs d'ergol revêtus de cet article et aux lanceurs spatiaux équipés de tels réservoirs. Dans l'ensemble du texte, l'expression « températures cryogéniques » doit être comprise comme désignant des températures très basses, telles que celles de l'oxygène liquide (90 K) et de l'hydrogène liquide (20 K).

### ÉTAT DE LA TECHNIQUE ANTÉRIEURE

Lorsqu'on désire assurer la protection d'un réservoir cryotechnique notamment destiné à équiper un lanceur, il est indispensable de le revêtir d'un matériau thermiquement isolant afin de limiter les entrées thermiques pour préserver de l'évaporation les ergols liquides qu'il contient. Il est fréquent que ce matériau thermiquement isolant, qui est soit collé, soit projeté directement sur le réservoir cryotechnique, soit en mousse rigide à cellules fermées en polychlorure de vinyle, polyuréthanne chargé ou non de verre, polyisocyanurate ou résines phénoliques. De tels matériaux, utilisés généralement en épaisseur d'environ 20 à 25 mm, donnent entière satisfaction dans le cas d'un environnement à pression ambiante (environ 1 bar). La demanderesse a déjà décrit de telles isolations thermiques de réservoirs cryotechniques dans ses demandes de brevet FR-A-2 876 438 et EP-A-1 878 663.

Or les isolations thermiques destinées à protéger les réservoirs cryotechniques ne sont pas optimisées pour assurer les contraintes mécaniques et thermiques durant toutes les phases d'utilisation (attente au sol, vol ascensionnel, phase balistique). Il est des cas où il serait intéressant et fort utile d'avoir la possibilité de disposer d'isolations bien meilleures quant à la performance thermique en condition de vide partiel ou secondaire (vol ascensionnel, phase balistique) tout en assurant des marges de résistance mécanique plus confortables, et sans accroître excessivement le poids de l'isolation. Les isolations selon la technique antérieure, dont la performance est indépendante de la pression gazeuse environnante, ne permettent pas de profiter du vide environnant caractérisant certaines phases de vol, et ne remplissent pas de manière optimale leur fonction. Elles n'empêchent pas d'importantes pertes d'ergols par évaporation, qui ne peuvent plus servir à la propulsion et deviennent des charges inutiles.

Une solution consisterait à recourir à l'utilisation d'une isolation multicouche radiative (MLI). Néanmoins, l'utilisation de cette isolation telle quelle entraîne des contraintes significatives d'abord redevables à sa fragilité. Une isolation MLI ne peut pas être exposée à l'extérieur d'un lanceur spatial, où elle serait soumise à des forces aérodynamiques excessives. Dans le cas de la protection d'un réservoir cryotechnique destiné à équiper l'étage supérieur d'un lanceur, la MLI impose de disposer le réservoir isolé sous la coiffe de protection des charges utiles. Le choix d'une MLI aurait donc un effet direct sur la conception du lanceur lui-même. De plus, du fait de l'absence d'étanchéité de la MLI, une coûteuse ventilation en hélium durant la phase d'attente au sol est nécessaire pour empêcher l'air d'atteindre le réservoir d'ergol liquide et provoquer un cryopompage.

### EXPOSÉ DE L'INVENTION

La présente invention répond à ces besoins divers d'amélioration et fournit un moyen de protection thermique capable de stabiliser la température à la face froide délimitant la zone à protéger, et ceci de façon optimale durant toutes les phases de vol (attente au sol, vol ascensionnel, phase balistique), tout en évitant d'inacceptables surcroîts de masse, pénalisants pour le lanceur en termes de charge utile.

Elle assure des performances fonctionnelles plus importantes. Plus spécialement dédiée au domaine aéronautique et spatial, elle peut également être employée dans tout autre secteur industriel dans lequel on utilise des protections thermiques.

Elle va être décrite dans le cas de l'isolation d'un réservoir cryotechnique d'un engin spatial, qui est une structure métallique à paroi mince à la température de l'ergol qu'il contient, par rapport à la température ambiante.

L'article d'isolation de l'invention est fondé sur la combinaison d'un substrat d'isolation déposé (selon une technique ou une autre) sur la structure à isoler, fréquement la paroi métallique des réservoirs, et d'une couche isolante supérieure caractéristique de l'invention, construite sous forme d'un capotage rigide muni de cavités ouvertes vers le substrat. Cette combinaison a l'avantage d'offrir un gain en performance thermique considérable par rapport aux constructions de l'art antérieur et avec une densité globale équivalente. La couche isolante supérieure, construite selon les revendications, a le double effet de protéger le substrat des conditions thermomécaniques existant à l'extérieur d'un lanceur pendant les phases de vol et de permettre le conditionnement du substrat par la circulation d'un gaz au sein des cavités, de façon à y maintenir une surpression par rapport à l'extérieur pendant l'attente au sol, qui évite l'entrée d'air sur le substrat susceptible de produire un cryopompage ; contrairement à certaines conceptions (telles que FR-A-2 055 577) où un fluide tel qu'un gaz liquéfié circule dans des conduits pour parfaire un article d'isolation par une réfrigération, consécutive à la circulation forcée de ce liquide, qui ne quitte pas les conduits et n'entre pas dans les cavités.

Les bénéfices apportés par l'invention sont plus importants dans le cas où le substrat comprend une couche en un matériau aux cellules fermées, une isolation multicouche radiative et plus encore une combinaison de ces deux isolations. Les cavités, se vidant pendant le vol, permettent seulement des échanges thermiques très limités, ce qui permet de réduire fortement l'épaisseur de la couche en matériau aux cellules fermées. L'isolation multicouche radiative est à peu près aussi efficace quand elle est recouverte par le capotage, tout en étant protégée par lui. De plus, l'utilisation d'un substrat en matériau aux cellules fermées, qui introduit une première barrière thermique entre les cavités et le réservoir qui constitue la source froide, permet d'effectuer un conditionnement des cavités par de l'azote plutôt que de l'hélium conformément aux conceptions connues, puisque l'extérieur du substrat est moins refroidi que quand il est recouvert seulement d'une couche de MLI, de sorte qu'on peut employer un gaz à la température de liquéfaction plus élevée, mais qui est bien moins coûteux.

Pour un engin spatial, les gains en performance thermique sont manifestes durant les phases de vol ascensionnel et balistique. La masse d'ergol évaporée dans les réservoirs, qui est devenue inconsommable, est ainsi considérablement réduite durant ces phases. Cela se traduit par un gain important en charge utile.

### EXPOSÉ DÉTAILLÉ DE MODES DE RÉALISATION PARTICULIERS

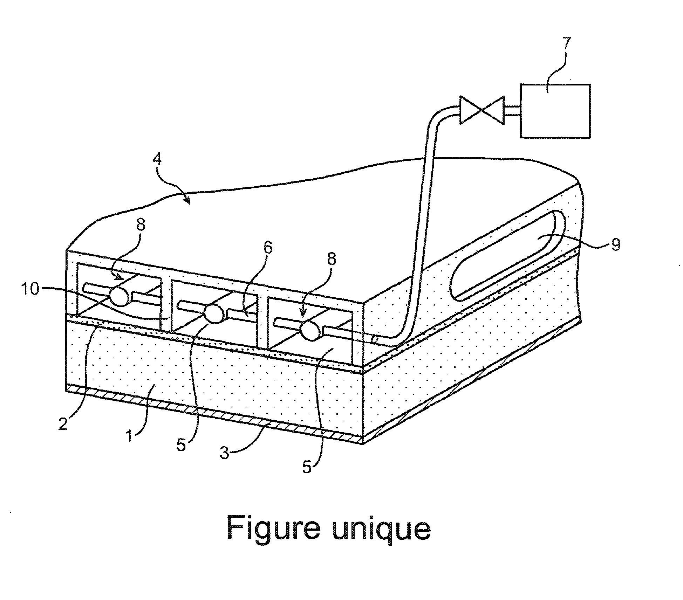

L'article d'isolation conforme à l'invention est représenté à la figure unique.

Il peut être appliqué sur un réservoir cryotechnique destiné à équiper l'étage supérieur d'un lanceur de type Ariane 5.

Cet article d'isolation thermique comprend d'abord une couche de substrat 1, en mousse rigide à cellules fermées en polyetherimide (PEI) et une isolation multicouche radiative 2 constituée d'écrans radiatifs en Mylar aluminisé et d'espaceurs en Dacron. La couche de substrat 1 est déposée sur la structure 3 à isoler, par projection directe ou collage, et l'isolation multicouche radiative 2 est déposée sur la couche de substrat 1. Il est rappelé que cette application ne doit en aucun cas être considérée comme limitative de la portée de l'invention. En effet, l'invention peut être utilisée dans tous les cas où l'on procède de manière identique pour isoler une structure soumise à des températures cryogéniques dans le but d'améliorer les performances thermiques et de réduire la masse du complexe isolant ainsi obtenu.

Dans cet exemple, la mousse en polyetherimide de la couche de substrat 1 est connue sous la dénomination R82 disponible auprès de la Société AIREX. Cette mousse à cellules fermées est caractérisée par une masse volumique de 60 kg/m³, et une conductivité thermique de 0,036 W/m.K à une température de 293 K (quelle que soit la pression externe).

Dans ce même exemple, l'isolation multicouche radiative 2 est disponible auprès de la Société AUSTRIAN AEROSPACE. Cette isolation est caractérisée par une masse surfacique de 150 g/m², et une émissivité effective de 0,0039 à une température moyenne de 188 K et pour une pression de 10-⁵ mbar.

L'article d'isolation de l'invention comprend encore une couche supérieure 4 réalisée sous forme d'un capotage. Elle aussi est en matériau à cellules fermées, éventuellement le même que la couche de substrat 1. Elle englobe des cavités 5 isolées de l'extérieur, mais qui s'ouvrent sur l'isolation multicouche radiative 2. Les cavités 5 sont traversées de conduits 6 de circulation de gaz qui y distribuent le contenu d'une alimentation en azote 7 par des buses 8 à une pression supérieure légèrement à l'ambiante. L'utilisation d'un appareillage physique pour assurer la ventilation n'est toutefois pas nécessaire: il pourrait être suffisant d'introduire le gaz de conditionnement par des perçages assurant la communication entre les cavités 5 et toute autre cavité remplie d'azote. La circulation du gaz peut encore être facilitée par des ouvertures 9 larges percées dans des cloisons 10 séparant les cavités 5 et assurant la tenue mécanique de l'ensemble. Les cavités 5 sont de grandes dimensions de façon à couvrir la plus grande partie de l'isolation multicouche radiative 2 et à limiter les ponts thermiques à travers les cloisons 10.

Afin de mieux comprendre tout l'intérêt que présente cet exemple illustratif, on va maintenant le comparer à l'isolation thermique utilisée actuellement sur la partie cylindrique du réservoir cryotechnique d'hydrogène de l'étage supérieur du lanceur Ariane 5 (géométrie ESC-B). Cette protection thermique est constituée de mousse connue sous la dénomination CRYOSOF, identique à celle décrite précédemment, et réalisée avec une épaisseur de 40 mm.

Les deux phases de vol dimensionnantes pour ce type d'isolation sont le vol ascensionnel et la phase balistique. Les critères de comparaison seront le flux thermique moyen entrant dans le réservoir durant le vol ascensionnel et la masse d'ergol évaporé (et donc inconsommable) durant la phase balistique. L'étude se limite à la partie cylindrique du réservoir.

Dans l'exemple présenté, on choisit pour illustrer l'invention des épaisseurs de mousse (couche de substrat 1 et couche supérieure 4) permettant de respecter les spécifications thermiques et mécanique de type Ariane 5. Avec ces configurations, on obtient les comparatifs qui sont donnés dans le tableau I suivant .

**Tableau I**

| **Configuration** | **Masse isolation (kg)** | **Flux moyen entrant Vol ascensionnel (W/m²)** | **Masse d'ergol évaporé phase balistique (kg)** |
|---|---|---|---|
| Monocouche CRYOSOF | 108,3 | 193,5 | 311 |
| Invention | 111,9 | 35,9 | 53 |

Le tableau I fait ressortir les gains significatifs apportés par l'invention. Avec une protection thermique dont la masse est équivalente (+3,3ô), on réduit les flux en vol ascensionnel de plus de 81ô et la masse d'ergol évaporé durant la phase balistique de 83%.

Le gain en terme de charge utile, pour un réservoir hydrogène d'étage supérieur dont la surface cylindrique isolée est d'environ 45 m², monté sur un lanceur de type Ariane 5, est de plusieurs centaines de kilogrammes (selon la mission et le type de réservoir).

## Revendications

1. Article d'isolation, comprenant un substrat à poser sur une structure (3) à isoler, et une couche isolante supérieure (4) en capotage rigide posée sur le substrat (1, 2), munie de cavités (5) ouvertes vers le substrat, **caractérisé en ce que** la couche isolante supérieure est creusée soit de conduits de distribution dans les cavités, soit de perçages, les conduits ou les perçages assurant une communication entre les cavités et soit une alimentation de gaz soit une autre cavité remplie de gaz.

2. Article d'isolation suivant la revendication 1, **caractérisé en ce que** les conduits (6) traversent les cavités (5) et y distribuent le gaz.

3. Article d'isolation selon la revendication 1 ou 2, **caractérisé en ce que** l'alimentation (7) est une alimentation en azote (7) sous pression.

4. Article d'isolation selon la revendication 1 à 3, **caractérisé en ce que** le substrat comprend une couche (1) de mousse à cellules fermées.

5. Article d'isolation selon la revendication 4, **caractérisé en ce que** le substrat comprend une isolation multicouche radiative (2) sur la couche (1) de mousse aux cellules fermées.

6. Article d'isolation selon l'une quelconque des revendications précédentes, **caractérisé en ce que** la couche isolante supérieure (4) est en mousse à cellules fermées.

7. Réservoir d'ergol, **caractérisé en ce qu'**il est revêtu d'un article d'isolation selon l'une quelconque des revendications précédentes.

8. Lanceur spatial, **caractérisé en ce qu'**il comporte un réservoir d'ergol selon la revendication 7.

## Claims

1. An insulation article, comprising a substrate to be laid on a structure (3) to be insulated, and an upper insulating layer (4) with stiff cover laid on the substrate (1, 2), provided with cavities (5) open towards the substrate, **characterized in that** the upper insulating layer is either dug with distribution conduits in the cavities or with drilled holes, the conduits or the drilled holes ensuring communication between the cavities and either a gas supply or another cavity filled with gas.

2. The insulation article according to claim 1, **characterized in that** the conduits (6) cross the cavities (5) and distribute the gas therein.

3. The insulation article according to claim 1 or 2, **characterized in that** the supply (7) is a pressurized nitrogen supply (7).

4. The insulation article according to claims 1 to 3, **characterized in that** the substrate comprises a foam layer (1) with closed cells.

5. The insulation article according to claim 4, **characterized in that** the substrate comprises a radiative multilayer insulation (2) on the foam layer (1) with closed cells.

6. The insulation article according to any of the preceding claims, **characterized in that** the upper insulating layer (4) is in foam with closed cells.

7. A propellant reservoir, **characterized in that** it is coated with an installation article according to any of the preceding claims.

8. A space launcher, **characterized in that** it includes a propellant reservoir according to claim 7.

## Patentansprüche

1. Isolationsartikel, umfassend ein Substrat, das auf eine zu isolierende Struktur (3) zu platzieren ist, sowie eine auf das Substrat (1, 2) als starre Verkleidung platzierte obere isolierende Schicht (4), die mit Hohlräumen (5) ausgestattet ist, welche zum Substrat hin offen sind, **dadurch gekennzeichnet, dass** die obere isolierende Schicht entweder durch Verteilungsleitungen in den Hohlräumen oder durch Bohrungen ausgehöhlt ist, wobei die Leitungen oder die Bohrungen eine Verbindung zwischen den Hohlräumen und entweder einer Gasversorgung oder einem anderen Hohlraum sicherstellen, der mit Gas gefüllt ist.

2. Isolationsartikel nach Anspruch 1, **dadurch gekennzeichnet, dass** die Leitungen (6) die Hohlräume (5) durchlaufen und das Gas dort verteilen.

3. Isolationsartikel nach Anspruch 1 oder 2, **dadurch gekennzeichnet, dass** die Versorgung (7) eine Versorgung mit unter Druck stehendem Stickstoff (7) ist.

4. Isolationsartikel nach einem der Ansprüche 1 bis 3, **dadurch gekennzeichnet, dass** das Substrat eine Schicht (1) aus geschlossenzelligem Schaum umfasst.

5. Isolationsartikel nach Anspruch 4, **dadurch gekennzeichnet, dass** das Substrat eine mehrschichtige Strahlungsisolation (2) auf der Schicht (1) aus geschlossenzelligem Schaum umfasst.

6. Isolationsartikel nach einem der vorhergehenden Ansprüche, **dadurch gekennzeichnet, dass** die obere isolierende Schicht (4) aus geschlossenzelligem Schaum ist.

7. Ergolbehälter, **dadurch gekennzeichnet, dass** er mit einem Isolationsartikel nach einem der vorhergehenden Ansprüche verkleidet ist.

8. Raumfahrtrakete, dadurch gekenntzeichnet, dass sie einen Ergolbehälter nach Anspruch 7 umfasst.
